Europäisches Patentamt

European Patent Office

Office européen des brevets

(19)

(11) Veröffentlichungsnummer: **0 107 210**
**A1**

(12) # EUROPÄISCHE PATENTANMELDUNG

(21) Anmeldenummer: 83110720.6

(22) Anmeldetag: 26.10.83

(51) Int. Cl.³: **F 16 H 31/00**, B 41 F 13/36

(30) Priorität: 26.10.82 DE 3239582

(43) Veröffentlichungstag der Anmeldung: 02.05.84
Patentblatt 84/18

(84) Benannte Vertragsstaaten: AT BE CH DE FR GB IT LI LU
NL SE

(71) Anmelder: Rotaprint GmbH, Reinickendorfer Strasse 46,
D-1000 Berlin 65 (DE)

(72) Erfinder: Jähme, Hans Joachim, Eckernfördestrasse 1,
D-6200 Wiesbaden (DE)

(74) Vertreter: Ruschke, Hans Edvard et al, Patentanwälte
Dipl. Ing. Olaf Ruschke Dipl. Ing. Hans E. Ruschke
Dipl.-Ing. Jürgen Rost Dipl.-Chem Dr. U. Rotter
Pienzenauerstrasse 2, D-8000 München 80 (DE)

(54) **Schaltvorrichtung zur wahlweisen Umsetzung einer kontinuierlichen Drehbewegung in zwei abwechselnd eingenommene Endlagen.**

(57) Ein um einen festen Punkt verschwenkender Schwenkhebel (14) einer kontinuierlich angetriebenen Kurbelschwinge (14, 16, 18) trägt an dem von diesem Punkt abgekehrten Ende einen in seinem Zentrum verschwenkbar gelagertem, dreizakkigen Schaltstern (12), mit zwei Schaltklinken (20, 22) und einen Schalthebel (23). Ein Schaltnocken (10) ist um den festen Punkt verschwenkbar gelagert und mit zwei auf demselben Radius angeordneten radialen Schultern (24, 26) versehen, die in Richtung auf die ihnen zugewandten Schaltklinken (20, 22) vorstehen. Wahlweise am Ende der in der einen Richtung verlaufenden Schwenkbewegung des Schaltsternes (12) die jeweils in die andere Richtung weisende Schaltklinke ist (20 bzw. 22) unmittelbar radial vor die zugeordnete Schulter (24 bzw. 26) einschwenkbar.

EP 0 107 210 A1

- 1 -

---------------------------------------------------------------

Schaltvorrichtung zur wahlweisen Umsetzung einer kontinuierlichen Drehbewegung in zwei

abwechselnd eingenommene Endlagen

---------------------------------------------------------------

Die vorliegende Erfindung betrifft eine Schaltvorrichtung zur wahlweisen Umsetzung einer kontinuierlichen Drehbewegung in zwei abwechselnd eingenommene Endlagen nach Patentanspruch 1.

Eine derartige Schaltvorrichtung kann für viele Zwecke nützlich sein und wird im vorliegenden Zusammenhang am Beispiel einer Zylinderschaltung für eine schnellaufende Offset-Druckmaschine beschrieben. Bekanntlich muß nach dem Ende des Druckens mittels einer Offset-Druckmaschine oder bei ausbleibendem Papier ("Fehlbogen") der Offset-Druckzylinder vom Formzylinder bzw. Gegendruckzylinder weggeschaltet werden, was durch Verdrehen der exzentrisch ausgeführten Welle des Offset-Druckzylinders erfolgt. Diese Verdrehung der genannten Welle

- 2 -

geschieht im Stand der Technik durch verschiedene Maßnahmen, so beispielsweise durch eine einfache Hebelanordnung, auf die nicht näher eingegangen werden soll. Das Zuschalten des Offset-Druckzylinders muß zu einem ganz bestimmten Zeitpunkt des Maschinentaktes der Druckmaschine gesehehen, und zu diesem Zweck müssen im übrigen nicht unerhebliche Kräfte aufgebracht werden, um eine ordnungsgemäße Verdrehung der exzentrischen Welle des Offset-Zylinders zu bewirken. Insbesondere bei schnellaufenden Druckmaschinen können sich aus diesen Forderungen ganz erhebliche Probleme sowohl in Bezug auf den korrekten Zeitpunkt des Schaltvorganges im Verhältnis zum Maschinentakt als auch aufgrund der auftretenden Kräfte entstehen. Im Stand der Technik kommt es hierbei zu sehr stark schlagartig auftretenden Belastungen.

Es ist hiernach die der Erfindung zugrundeliegende Aufgabe, eine Schaltvorrichtung der eingangs beschriebenen Art vorzusehen, die eine hohe Funktionssicherheit bei hohen Drehzahlen bietet und im Augenblick des Schaltens möglichst geringe mechanische Belastungen erzeugt, obwohl eine genau definierte Winkelbeziehung des Schaltvorganges zum Maschinentakt beibehalten wird.

Diese Aufgabe wird erfindungsgemäß durch die Merkmale des Patentanspruches 1 gelöst. Indem die jeweilige Schaltklinke

- 3 -

des Schaltsternes sich im Totpunkt der Hin- und Herbewegung des Schwenkhebels vor die zugeordnete Schulter des Schaltnockens legt, geschieht der Schaltvorgang praktisch bei der geringstmöglichen Relativbewegung zwischen dem Schaltstern und dem Schaltnocken. Dadurch werden schlagartige Belastungen vermieden, weil aufgrund der schwingenden Bewegung des Schaltsternes die Geschwindigkeit von nahezu Null ausgehend erst allmählich zunimmt.

Indem der Schalthebel des Schaltsternes durch einen von einem Schaltmagneten betätigten Kipphebel mit zwei Anschlägen verstellt wird, auf die der Schaltstern jeweils am Ende seiner hin- und hergehenden Bewegung aufläuft, erfolgt der Schaltvorgang völlig unabhängig von der tatsächlichen Aktivierung der Vorrichtung mit Hilfe des Schaltmagneten. Denn gleichgültig wann dieser betätigt wird, erfolgt die Umstellung des Schaltsternes in die jeweils andere Lage erst im Bereich des Totpunktes der Schwenkbewegung, also zu einem im Verhältnis im Maschinentakt genau definierten und unveränderbaren Zeitpunkt.

Indem der Schaltnocken über eine Kniehebelverbindung auf die Welle des Offset-Zylinders wirkt, können mit Hilfe von relativ geringen Wegen und Kräften verhältnismäßig große Kräfte erzeugt werden, da das Kniehebelgelenk die Welle des Offset-Zylinders im eingeschalteten Zustand in seiner durchgedrückten Übertotpunktlage fixiert.

Der Steuernocken kann ebenfalls über eine geeignete Totgangverbindung mit dem Schalthebel eines Waschwerkes der Offset-
Druckmaschine verbunden sein, der in der weggeschwenkten Lage
des Waschwerkes über einen Schaltmagneten und einen Arretierhebel feststellbar ist. Durch Lösen dieses Arretierhebels,
d.h. durch Freigeben des Waschwerkhebels, der durch eine Zugfeder beaufschlagt ist, wird die Totgangverbindung inaktiviert, so daß der Waschwerkshebel der Bewegung des Schaltnockens kraftschlüssig folgen kann, bis er wieder formschlüssig durch den Arretierhebel festgelegt wird.

Eine Ausführungsform der erfindungsgemäßen Schaltvorrichtung
wird im nachfolgenden unter Bezugnahme auf die beigefügte
Zeichnung beschrieben, die die Schaltvorrichtung im Zusammenhang mit einer Zylinder- und Waschwerksschaltung einer schnelllaufenden Offset-Druckmaschine zeigt.

Die Arbeitsweise der erfindungsgemäßen Schaltvorrichtung wird
erläutert anhand einer Zylinderschaltung für eine schnellaufende Offset-Druckmaschine, bei der die Zu- und Abschaltung
der exzentrisch gelagerten Welle 2 des Offset-Zylinders
durch eine leichte Verdrehung dieser Welle über einen an
dieser Welle angreifenden Exzenterhebel 4 geschieht. Diese
Verschwenkung des Exzenterhebels 4 erfolgt durch ein Kniehebelgelenk K, welches aus einem an einem Schaltnocken 10

- 5 -

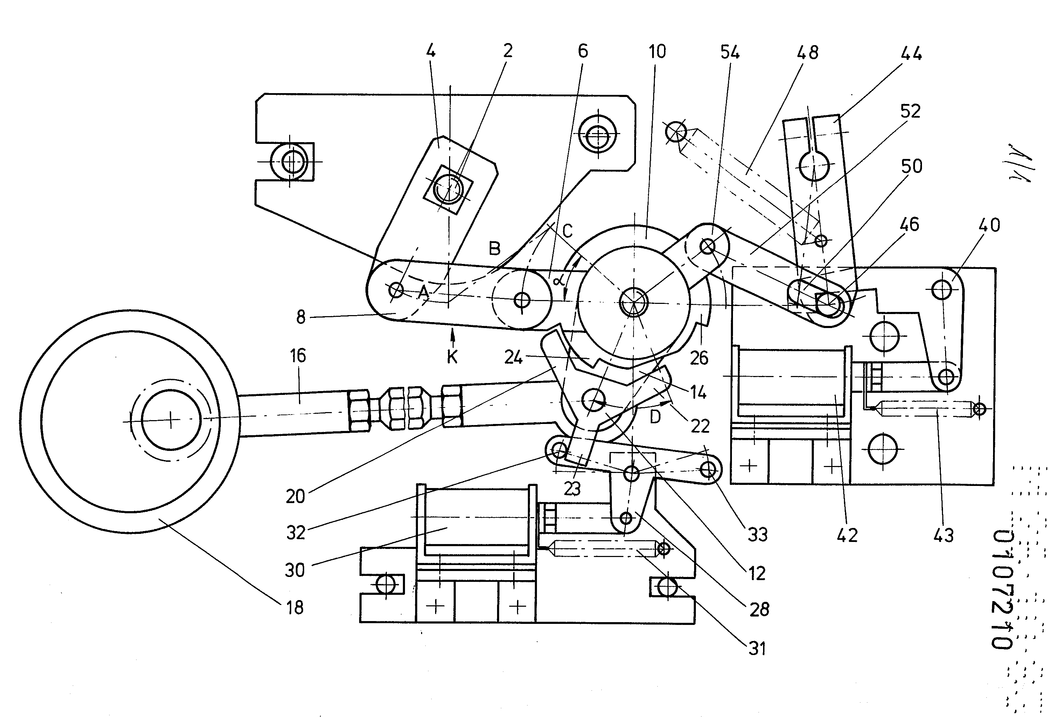

angeordneten Schwenkhebel 6 und einem letzteren und den Exzenterhebel 4 verbindenden Hebelglied 8 besteht. In der in der Zeichnung gezeigten durchgedrückten Stellung des Kniehebelgelenkes befindet sich der Offset-Zylinder im eingeschalteten, d.h. druckenden Zustand, und er kann durch eine im Uhrzeigersinne um einen gewissen Winkelbetrag $\alpha$ erfolgende Verschwenkung des Schaltnockens 10 der erfindungsgemäßen Schaltvorrichtung von den anderen Zylindern der Offset-Druckmaschine weggeschaltet werden. Nach diesem Verschwenken des Schaltnockens nehmen der Exzenterhebel 4, das Hebelglied 8 und der Schwenkhebel 6 am Schaltnocken 10 die durch die Striche A, B, C angedeutete Stellung ein. Wenn der Schaltnocken 10 um den gleichen Winkelbetrag $\alpha$ wieder im Gegenuhrzeigersinne verdreht wird, nimmt die Kniehebelanordnung K wieder die gezeichnete durchgedrückte Stellung ein, d.h. der Exzenterhebel 4 wird in seine Ausgangslage zurückgedrückt und der Offset-Zylinder kann wieder drucken.

Das Verdrehen des Schaltnockens in der einen oder anderen Richtung wird durch eine Klinkenanordnung in Form eines Schaltsternes 12 bewirkt, dessen Aufbau und Funktionsweise im nachfolgenden näher erläutert wird. Dieser Schaltstern ist mit seinem Drehpunkt am Ende eines Schwenkhebels 14 gelagert, der auf der gleichen Achse wie der Schaltnocken 10 angeordnet ist. Dieser Schwenkhebel 14 ist über eine verstellbare Zug- und Druckstange 16 mit einem Exzenterantrieb 18 verbunden, der zusammen mit der Offset-Druckmaschine im Maschinentakt betrieben wird. In der gezeichneten
Stellung dieses Exzenterantriebes ist der Schwenkhebel 14
mit dem an ihm befestigten Schaltstern 12 in dem linken
Totpunkt gezeigt.

Die beiden zum Schaltnocken 10 hinweisenden Schaltklinken
20, 22 des Schaltsternes 12 arbeiten zum Verstellen des
Offset-Zylinders mit den zugeordneten Schultern 24, 26 an
dem Schaltnocken zusammen, wie noch näher beschrieben werden
wird. Der Schaltstern schwingt, wie durch den Doppelpfeil D
angedeutet wird, aufgrund der Funktion des Exzenterantriebes
18 kontinuierlich hin und her. Die Stellung des Schaltsternes 12 im Verhältnis zum Schaltnocken 10 wird durch
einen in seinem Zentrum am Maschinengestell verschwenkbar
gelagerten T-förmigen Hebel 28 bestimmt, dessen Schwenkstellung von einem Zylinder-Schaltmagneten 30 beeinflußt
wird. In der gezeichneten Stellung hat der Schaltmagnet 30
Strom und zieht den T-Hebel 28 in die gezeichnete Stellung,
in der dieser in der Figur leicht nach rechts geneigt ist,
so daß der Schalthebel 23 des Schaltsternes in der eingezeichneten linken Totpunktlage gerade gegen den linken
Schaltbolzen 32 des T-Hebels 28 aufläuft.

- 7 -

Tritt nun beim Drucken ein sogenannter Fehlbogen auf, was
durch eine elektrische Überwachungseinrichtung festgestellt
werden kann, oder soll aus einem anderen Grunde das Drucken
beendet werden, wird der Zylinder-Schaltmagnet 30 stromlos
gemacht und die Zugfeder 31 bewegt seinen Anker nach rechts,
womit der T-förmige Hebel in die entgegengesetzte Endlage
geschwenkt wird, d.h. er wird dann eine in der Figur nach
links geneigte spiegelbildliche Stellung einnehmen, in der
der rechte Schaltbolzen 33 in die Bahn des Schalthebels 23
am hin- und herschwingenden Schaltstern 12 gerät. Beim
Auflaufen auf diesen Schaltbolzen 33 wird der Schalthebel 23
festgehalten und der Schaltstern 12 dreht notwendigerweise
um ein gewisses Maß im Uhrzeigersinn, so daß damit seine
linke Schaltklinke 20 sich vor die linke Schulter 24 am
Schaltnocken 10 legt. Dies geschieht praktisch in der rechten
Totpunktlage des um das Zentrum des Schaltnockens 10 hin-
und herschwingenden Schwinghebels 14 und unmittelbar nach
dem Beginn des Zurückschwingens (in der Zeichnung nach
links) kommt die linke Schaltklinke 20 des Schaltsternes 12
mit der genannten linken Schulter 24 des Schaltnockens in
Eingriff, d.h. zu einem Zeitpunkt, da die Geschwindigkeit des
hin- und herschwingenden Schaltsternes 12 noch sehr gering
ist. Bei der anschließenden Vervollständigung der Schwingbewegung des Schaltsternes von der rechten Totpunktlage in
die linke Totpunktlage wird der Schaltnocken 10 im Uhrzei-

- 8 -

gersinn verdreht und die Kniehebelanordnung K mit dem Exzenterhebel 4 nimmt schließlich die durch die Striche A, B, C angedeutete Stellung ein, in der der Offset-Zylinder weggeschaltet ist bzw. nicht druckt. Das Erreichen der Stellung A, B, C wird durch eine nicht näher dargestellte Federbeaufschlagung des Exzenterhebels 4 im Uhrzeigergegensinn unterstützt.

Nach Vollendung dieser Verdrehung des Schaltnockens 10 um den Winkel $\alpha$ schwingt der Schaltstern 12 wieder frei hin und her, ohne die rechte Schulter 26 des Schaltnockens zu berühren, obwohl diese Schulter gegenüber der gezeichneten Stellung um den Winkel $\alpha$ näher am Schaltstern 12 angeordnet ist, weil der Schaltstern in der durch sein Auflaufen gegen den rechten Schaltbolzen 33 des T-Hebels 28 im Uhrzeigersinn verdrehten Stellung (durch Reibung) festgehalten wird, so daß die rechte Schaltklinke 22 des Schaltsternes über die rechte Schulter 26 des Schaltnockens 10 hinweggleitet - die Schultern 24 und 26 haben den gleichen radialen Abstand vom Zentrum des Schaltnockens.

Soll nun die Kniehebelanordnung K wieder in die gezeichnete durchgedrückte Stellung bewegt werden, d.h. der Offset-Zylinder wieder drucken soll, wird (zu einem beliebigen Zeitpunkt) der Zylinder-Schaltmagnet 30 betätigt, der den

- 9 -

T-Hebel 28 entgegen der Kraft der Zugfeder 31 wieder in
die eingezeichnete, nach rechts geneigte Stellung bewegt.
Sobald daraufhin der (gegenüber der gezeichneten Position)
im Uhrzeigersinn verdrehte Schaltstern 12 mit seinem Schalthebel 23 gegen den linken Schaltbolzen 32 des T-Hebels
aufläuft, wird der Schaltstern gegen den Uhrzeigersinn in
seine gezeichnete Ausgangslage zurückgedreht, was wiederum
in der Nähe bzw. am linken Totpunkt der Schwingbewegung
des Schwenkhebels 14 geschieht. Dadurch wird die rechte
Schaltklinke 22 des Schaltsterns unmittelbar vor die dann um
den Winkel $\alpha$ im Uhrzeigersinn versetzte rechte Schulter 26
des Schaltnockens geschwenkt und bei dem Zurückschwingen des
mit dem Schaltstern 12 versehenen Schwenkhebels 14 in Richtung auf den entgegengesetzten rechten Totpunkt wird der
Schaltnocken 10 in die gezeichnete Stellung im Uhrzeigergegensinn zurückgedrückt, in der das Kniehebelgelenk K sich
in der durchgedrückten Übertotpunktlage befindet. Der
Beginn dieses Zurückdrückens des Schaltnockens geschieht
wiederum in der Nähe des linken Totpunktes, d.h. bei einer
sehr geringen Geschwindigkeit, so daß die dabei auftretenden
Kräfte relativ gering sind. Eine stoßartige Belastung der
ganzen Vorrichtung wird dadurch möglichst weitgehend vermieden.

- 10 -

Nach den beschriebenen Schaltvorgängen befindet sich die Schaltvorrichtung wieder in der gezeichneten Stellung, in der der auf dem Schwenkhebel 14 angeordnete Schaltstern 12 aufgrund des Exzenterantriebes 18 frei hin- und herschwingt, ohne eine Schaltung zu bewirken, bis wiederum der Schaltmagnet 30 betätigt wird. In der gezeigten Stellung kann die linke Schaltklinke 20 des Schaltsternes beim Hin- und Herschwingen nicht mit der linken Schulter 24 des Schaltnockens in Eingriff kommen, weil er aufgrund seiner gegenüber zuvor gegen den Uhrzeigersinn verdrehten Stellung, in der er durch Reibung festgehalten wird, über die linke Schulter 24 des Schaltnockens hinweggleitet. Die rechte Schaltklinke 22 des Schaltsternes hat zwar den gleichen radialen Abstand von dem Zentrum des Schaltnockens 10 wie die rechte Schulter 26, doch kann dies jetzt keine Verdrehung des Schaltnockens bewirken, weil die rechte Schaltklinke 22 die rechte Schulter 26 des Schaltnockens gerade erst in der rechten Totpunktslage der Schwingbewegung des Schaltsternes erreicht.

Die beschriebene Schaltvorrichtung kann im übrigen auch dazu verwendet werden, bei Bedarf das Waschwerk der Offset-Druckmaschine zu- oder abzuschalten. Hierauf wird nachfolgend näher eingegangen.

Mit Hilfe eines verschwenkbar gelagerten hakenartigen Arretierhebels 40, der von einem Waschwerk-Schaltmagneten 42 betätigt werden kann, wird der Waschwerkshebel 44 während des üblichen Druckens in der gezeichneten Stellung gehalten, wodurch das nicht näher dargestellte Waschwerk der Offset-Druckmaschine weggeschaltet bleibt. Zum Zuschalten des Waschwerkes muß zunächst der Offsetzylinder weggeschaltet werden, d.h. der Schaltnocken 10 muß in die gegenüber der gezeichneten Stellung um den Winkel verdrehte Endlage gebracht werden. Dadurch kommt das innere Ende des Langloches 50 zur Anlage an dem Bolzen 46 am freien Ende des Hebelgliedes 52, und zwar derart, daß dieser Bolzen sich entgegen der Kraft der Zugfeder 48 geringfügig von dem hakenartigen Ende des Arretierhebels 40 abhebt. Damit wird der Waschwerks-Schaltmagnet 42 in die Lage versetzt, den Arretierhebel 40 um ein gewisses Maß im Uhrzeigersinn zu verschwenken und den Bolzen 46 am freien Ende des Waschwerkshebels 44 freizugeben. Wenn dann anschließend für den Waschvorgang der Offsetzylinder wieder zugeschaltet wird, d.h. der Schaltnocken 10 in die gezeichnete Lage zurückgeschwenkt wird, kann der Waschwerkshebel 44 unter dem Einfluß der Zugfeder 48 der Bewegung des Hebelgliedes 52 folgen, so daß das Waschwerk dann die Druckzylinder waschen kann. Nach Abschluß des Waschens wird die Zylinderschaltung wiederum betätigt, so daß der Waschwerkshebel 44 die gezeichnete Lage wieder einnimmt, in der der hakenförmige Arretierhebel 40 den Bolzen 46 hintergreifen und somit festlegen kann, sobald der Offsetzylinder wieder für den nächsten Druck- vorgang zugeschaltet wird.

MÜNCHEN
Pienzenauerstraße 2
8000 München 80
Telefon: (0 89) 98 03 24,
98 72 58, 98 88 00
Telecopy Gr. II: (0 89) 222 066
Kabel: Quadratur München
Telex: 522 767 quam d

BERLIN
Kurfürstendamm 182/183
1000 Berlin 15
Telefon: (0 30) 8 83 70 78/79
Kabel: Quadratur Berlin

# RUSCHKE & PARTNER
## ANWALTSSOZIETÄT

München, den **2 6. Okt. 1983**

Dr.-Ing. Hans Ruschke †30.1980
Dipl.-Ing. Hans E. Ruschke
Dipl.-Ing. Olaf Ruschke*
Dipl.-Ing. Jürgen Rost
Dipl.-Chem. Dr. Ulrich Rotter
Patentanwälte
Zugelassen beim Europäischen Patentamt
Admitted to the European Patent Office
* in Berlin

Rainer Schulenberg
Rechtsanwalt
Zugelassen bei den LG München I und II,
beim OLG München und dem
Bayer. Obersten Landesgericht

R 1619 HO

ROTAPRINT GMBH

Reinickendorfer Str. 46, 1000 Berlin 65

-----------------------------------------------------------------------

P a t e n t a n s p r ü c h e

1.  Schaltvorrichtung zur wahlweisen Umsetzung einer kontinuierlichen Drehbewegung in zwei Endlagen, <u>dadurch gekenn- zeichnet, daß</u> der um einen festen Punkt verschwenkende Schwenkhebel (14) einer kontinuierlich angetriebenen Kurbelschwinge (14, 16, 18) an dem von diesem Punkt abgekehrten Ende einen in seinem Zentrum verschwenkbar gelagertem, dreizackigen Schaltstern (12) mit zwei Schaltklinken (20, 22) und einen Schalthebel (23) trägt,

daß, ein Schaltnocken (10) um den festen Punkt verschwenkbar gelagert und mit zwei auf demselben Radius angeordneten radialen Schultern (24, 26) versehen ist, die in Richtung auf die ihnen zugewandten Schaltklinken (20, 22) vorstehen,

und daß wahlweise am Ende der in der einen Richtung verlaufenden
Schwenkbewegung des Schaltsternes (12) die jeweils in die
andere Richtung weisende Schaltklinke (20 bzw. 22) unmittelbar radial vor die zugeordnete Schulter (24 bzw. 26)
einschwenkbar ist.


2. Vorrichtung nach Anspruch 1, <u>dadurch gekennzeichnet, daß</u>
in der Nähe der beiden Totpunkte der Schwenkbewegung des
Schaltsternes (12) jeweils ein Anschlag (Schaltbolzen 32 bzw.
33) in die Bahn des Schalthebels (23) ein- bzw. aus ihr herausschwenkbar ist.


3. Vorrichtung nach Anspruch 2, <u>dadurch gekennzeichnet, daß</u>
die Anschläge (Schaltbolzen 32 bzw. 33) an den beiden Enden
eines in seiner Mitte verschwenkbar gelagerten Hebels (28)
angeordnet sind, der über einen Schaltmagneten (30) und eine
Rückstellfeder (31) in die Bahn des Schalthebels (23) verschwenkbar ist.


4. Schaltvorrichtung nach Anspruch 1, oder 2, <u>dadurch gekennzeichnet, daß</u> der Schaltnocken (10) über ein Kniehebelgelenk
(Schwenkhebel 6, Hebelglied 8, Exzenterhebel 4) die Exzenterwelle des Offset-Zylinders einer Druckmaschine betätigt, wobei die eine Endlage des Schaltnockens das Kniehebelgelenk in der durchgedrückten Übertotpunktlage fixiert, während die andere Endlage des Steuernockens das Kniehebelgelenk in der entspannten, gebeugten Lage anordnet.

5. Schaltvorrichtung nach Anspruch 4, dadurch gekennzeichnet, daß der Schaltnocken (10) über eine wahlweise deaktivierbare Totgangverbindung (Schwenkhebel 54, Hebelglied 52, Langloch 50) einen federbeaufschlagten Waschwerkshebel (44) in zwei Endlagen bringt.

6. Schaltvorrichtung nach Anspruch 5, dadurch gekennzeichnet, daß der Waschwerkshebel (44) mittels eines von einem Schaltmagneten (42) betätigten Arretierhebels (40) in der inakti-vierten Lage festlegbar ist.

4  2  6  10  54  48  44

52

50

B  C

46  40

A  α

8

K

16  24  26  14

22

20  23  33  42  43

32  28

30  31

18  12

0107210

Europäisches
Patentamt

EUROPÄISCHER RECHERCHENBERICHT

0107210

Nummer der Anmeldung

EP 83 11 0720

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-C- 529 193 (MASCHINENFABRIK AUGSBURG-NÜRNBERG) * Ganzes Dokument * | 1,2 | F 16 H 31/00 B 41 F 13/36 |
| Y | | 3 | |
| Y | DE-C- 529 326 (MASCHINENFABRIK AUGSBURG-NÜRNBERG) * Ganzes Dokument * | 3 | |
| A | DE-C- 265 755 (ANGLO-AMERICAN INVENTIONS SYNDICATE) * Anspruch 1; Figur 1 * | 4 | |
| A | DE-U-1 875 130 (MASCHINENFABRIK AUGSBURG-NÜRNBERG) * Ansprüche 1,2; Figur 1 * | 3 | RECHERCHIERTE SACHGEBIETE (Int. Cl. 3) |
| A | US-A-2 844 096 (W. KOCH) | | F 16 H 31/00 F 16 H 29/00 F 16 H 35/00 B 41 F 13/00 |
| A | DE-C-1 155 297 (FAHRZEUGWERK WEIDNER) | | |

Der vorliegende Recherchenbericht wurde für alle Patentansprüche erstellt.

| Recherchenort | Abschlußdatum der Recherche | Prüfer |
|---|---|---|
| BERLIN | 06-01-1984 | LEMBLE Y.A.F.M. |